(19) Europäisches Patentamt

European Patent Office

Office européen des brevets

(11) **EP 1 099 087 B1**

(12) **EUROPEAN PATENT SPECIFICATION**

(45) Date of publication and mention
of the grant of the patent:
**13.08.2003 Bulletin 2003/33**

(21) Application number: **99926992.1**

(22) Date of filing: **23.06.1999**

(51) Int Cl.[7]: **F27D 21/00**

(86) International application number:
**PCT/NO99/00212**

(87) International publication number:
**WO 00/001996 (13.01.2000 Gazette 2000/02)**

(54) **METHOD FOR ESTIMATING ELECTRODE TIP POSITION**

VERFAHREN ZUM SCHÄTZEN DER POSITION DER ELEKTRODENSPITZE

PROCEDE D'ESTIMATION DE LA POSITION D'UNE POINTE D'ELECTRODE

(84) Designated Contracting States:
**AT CY DE DK ES FI FR GB IT LU PT SE**

(30) Priority: **01.07.1998 NO 983048**

(43) Date of publication of application:
**16.05.2001 Bulletin 2001/20**

(73) Proprietor: **Elkem ASA**
**0377 Oslo (NO)**

(72) Inventors:
 • **BRUSTAD, Georg**
  **N-7032 Trondheim (NO)**
 • **MYRHAUG, Edin, Henrik**
  **N-7075 Tiller (NO)**
 • **TVEIT, Halvard**
  **N-7046 Trondheim (NO)**
 • **VALDERHAUG, Aasgeir**
  **N-4639 Kristiansand (NO)**

(74) Representative: **Rees, David Christopher et al**
**Kilburn & Strode**
**20 Red Lion Street**
**London WC1R 4PJ (GB)**

(56) References cited:
 **EP-A1- 0 475 008**        **EP-A2- 0 212 491**
 **WO-A1-95/16336**         **DE-A- 1 934 218**
 **NO-B- 162 975**          **US-A- 4 761 892**

 • **DATABASE WPI Week 7716, Derwent Publications Ltd., London, GB; Class J09, AN 1977-28719Y, XP002940785 & SU 528 710 A (SPELITSIN R I) 23 September 1976**
 • **DATABASE WPI Week 198251, Derwent Publications Ltd., London, GB; AN 1982-11192J, XP002940786 & SU 907 880 A (ELECTROTHERMAL EQUI) 23 February 1982**

## Description

## Field of Invention

The present invention relates to a method for estimating electrode tip position for a consumable electrode in an electric smelting furnace.

## Background Art

In electric smelting furnaces for the production of ferro-alloys, silicon, pig iron, etc. it is used consumable carbon electrodes which, during operation of the furnaces are submerged in the furnace charge. The electrodes are held by electrode holders which are also used for supplying electric operating current to the electrodes. The electrodes are regulated up and down by means of hydraulic cylinders in order to obtain and maintain a preselected set point for current strength or electric resistance. The electrode system is further equipped with means for slipping of the electrode down through the electrode holder to compensate for electrode consumption.

The electrode tip position in the furnace is an important control parameter for operation of electric smelting furnaces. It has, however, been found difficult to determine the tip position of the electrode with a high degree of certainty over longer periods of time.

Normally, the electrode tip position can only be measured by manual sounding of the electrode length by sticking a steel rod through the charge from the edge of the furnace. Manual sounding is, however, done at relatively long time intervals as manual sounding requires that the charge in the furnace is melted down without addition of charge materials, whereafter the furnace operation has to be stopped in order to manually sounding the electrode. This procedure causes loss of production and is therefore done as seldom as possible.

It has further been proposed methods for estimating the tip positions of electrodes based on an assumed, constant electrode consumption per unit of time, combined with manual electrode sounding. These methods for estimating electrode tip position have, however, not resulted in a sufficient accurate, estimation of the electrode tip position during time, due to the fact that the model used to estimate the electrode consumption has not been sufficiently accurate, mainly due to the fact that electrode consumption is not constant during time, but varies due to a number of factors, like supplied electric power, current strength, charge composition, quality of the electrode material etc.

## Disclosure of the invention

It therefore exist a need for a method for estimating the tip position for submerged, consumable electrodes in electric smelting furnaces which by a higher degree of accuracy can provide an improved estimate for the electrode tip position at any time.

Accordingly, the present invention relates to a method for estimating the electrode tip position for submerged, consumable electrodes in electric smelting furnaces, where the electrode tip position for an electrode is estimated based on the position of the electrode holder and a function for consumed electrode per unit of time, which method is characterized in that it is established an upper and a lower uncertainty range for estimated electrode tip position, which upper and lower uncertainty ranges are increased during normal operation of the furnace and where the size of the upper and lower uncertainty ranges is updated by manual sounding of the electrode and/or by weighing of the electrode and/or by vertical movement of the electrode.

According to a preferred embodiment of the present invention the upper and lower uncertainty ranges during normal operation of the furnace are increased according to the following formulas:

$$SP^+ = K_1 \sqrt{t} + SP^+(t=0)$$

and

$$SP^- = K_2 \sqrt{t} + SP^-(t=0),$$

Where $SP^+$ and $SP^-$ are respectively the size of the upper and the lower uncertainty ranges, K, and $K_2$ are empirical constants, and where t is the time from the last updating of $SP^+$, respectively $SP^-$. The constants $K_1$ and $K_2$ can either be identical whereby the increase in the upper and lower uncertainty range during normal operation of the furnace will be identical, or $K_1$ can be greater than $K_2$ whereby the upper uncertainty range, $SP^+$ will increase faster than the lower uncertainty range during normal operation of the furnace.

According to another embodiment, the upper and lower uncertainty ranges after manual sounding of the electrode length are updated to a size which corresponds to the uncertainty in the manual sounding of the electrode length.

According to another embodiment, the upper and lower uncertainty ranges after weighing of the electrode are adjusted to a size which corresponds to the uncertainty in electrode length for calculated electrode length based on weighing of the electrode.

According to yet another embodiment of the method of the present invention, the upper uncertainty range for estimated electrode length is updated if the upper limit for the upper uncertainty range during lifting of the electrode is greater than a maximum value for the electrode tip position. In a corresponding way, the lower uncertainty range for estimated electrode tip position is updated if the lower limit for the lower uncertainty range during lowering of the electrode is below a minimum value for the electrode tip position. This minimum value for the electrode tip position will normally be the original bottom of the furnace.

By the use of the method according to the present invention one will with a very high degree of certainty know that the electrode tip position at any time is positioned with the area between the upper and lower uncertainty ranges. By updating the uncertainty ranges by manual sounding of the electrode length, by weighing of the electrode or by vertical movement of the electrode, the uncertainty ranges can be kept at a reasonable size allowing the use of estimated tip position as a control or operating parameter for operation of smelting furnaces even if the exact tip position is not known.

## Brief description of the Invention

Figure 1 shows schematically a consumable electrode submerged in the charge of an electric smelting furnace,

Figure 2 is a block-diagram which shows a general model for electrode consumption, models for calculating the upper and the lower uncertainty ranges for electrode tip position and how manual sounding of electrode length or electrode weighing can be used to correct the models for the uncertainty ranges and for the electrode consumption.

Figures 3a, 3b, 3c and 3d, show schematically how lifting and lowering of the electrode can be used to update the size of the upper and lower uncertainty ranges for the electrode tip position.

## Detailed description of the Invention

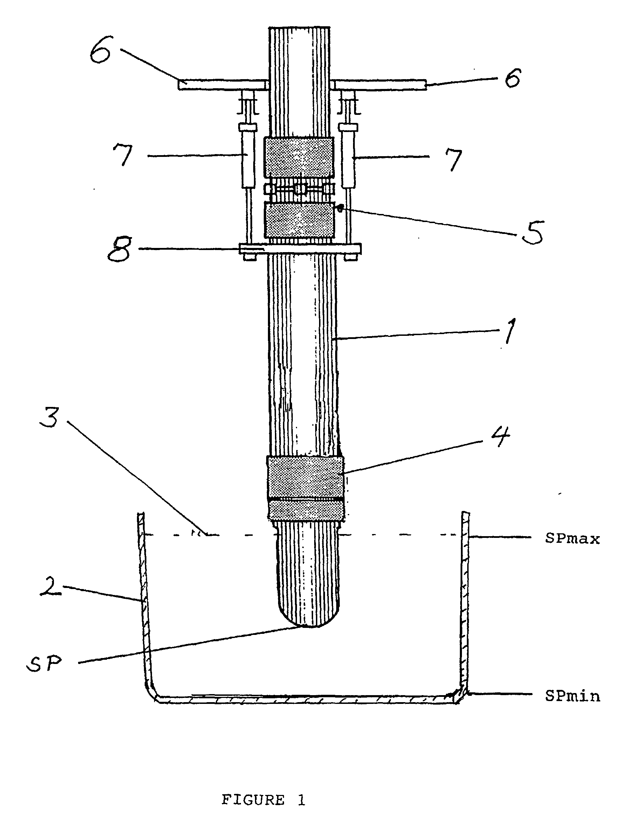

On figure 1 there is schematically shown a consumable carbon electrode 1, submerged in the charge in an electric smelting furnace 2. The level of the charge in the furnace is indicated by reference numeral 3.

The electrode 1 is equipped with an electrode holder 4 for holding and for supply of electric current to the electrode 1. The electrode 1 is further equipped with conventional electrode slipping means 5 for slipping of the electrode through the electrode holder 4. The electrode 1 is suspended from the building 6 via electrode regulating cylinders 7 which are secured to an electrode frame 8.

During operation of the smelting furnace 2, the electrode 1 is regulated up or down by means of the electrode regulating cylinders 7 in order to maintain the electric current or the electric resistance at a preset set point.

The electrode 1 is, as shown in figure 1, submerged in the charge whereby the electrode tip position (SP) normally can not be observed. For the following description the electrode tip position is defined as the distance from the bottom of the furnace to the electrode tip. In order to manually measure the length of the electrode, defined as the distance between the lower edge of the electrode holder 4 and the tip of the electrode 1, the charge has to be melted down and the electrode 1 must then be lifted until it is possible to manually measure the electrode length. When the electrode holder position, HP, and the length of the electrode, L, are known, the electrode tip position is calculated as SP = HP - L + Lo, where Lo is the distance for the lower edge of the electrode holder 4 to the furnace bottom when the electrode holder position is 0.

The electrode is being consumed during operation of the smelting furnace. The electrode consumption rate varies and is dependent on a number of parameters such as supplied electric effect, current strength, charge composition, quality of the electrode material and others. In order to compensate for the electric consumption, the electrode is at intervals slipped down through the electrode holder 4 by means of the electrode slipping means 5.

By the method of the present invention it is taken as a starting point that the electrode tip position, SP, always will be above the bottom of the furnace 2 and have a minimum value shown on figure 1 as SPmin. Further the electrode will always be submerged in the charge, at a normal charge level, and the electrode tip position will thus have a maximum value shown on figure 1 as SPmax.

After the electrode tip position has been determined, for example, by manual sounding of the electrode length, an upper and a lower uncertainty range for the electrode tip position are calculated. The upper and lower uncertainty ranges after manual sounding of the electrode, are set to values corresponding to the uncertainty in the manual sounding of the electrode length. Thus, if one during manual sounding of the electrode can measure the electrode length with an accuracy of 0.5 meter, the upper and lower uncertainty ranges are each set to a value of 0.25 meter. At this point of time one will know with certainty that the electrode tip position is within the interval between the upper and lower limits for the uncertainty ranges. By continued operation of the smelting furnace the electrode tip position is estimated by means of a model for electrode consumption where the electrode consumption is estimated according to: $\frac{dL}{dt} = s - Cp$, where the change in electrode length per unit time, $\frac{dL}{dt}$, is equal to the difference between electrode slipping, s, per unit time and the electrode consumption, Cp, per unit time. The electrode consumption is assumed to be proportional to supplied electric effect, p. The electrode consumption is, however, as mentioned above, dependent on a number of other parameters such as current strength, carbon content in the charge, the quality of the electrode materials, and others. Thus the above mentioned model for electrode consumption, gives a certain uncertainty in the estimated electrode tip position. This uncertainty in the calculation of the electrode consumption increases with time and the upper and lower uncertainty ranges for the electrode tip position are therefore also increased during time, until the electrode tip position again can be measured by manual sounding of the electrode, by weighing of the electrode or by vertical movement of the electrode in a way which will be described later.

The upper and lower uncertainty ranges for the electrode tip position is increased during normal furnace operation according to the following formulas:

$$SP^+ = K_1 \sqrt{t} + SP^+(t=0)$$

$$SP^- = K_2 \sqrt{t} + SP^-(t=0),$$

where $SP^+$ is the value of the upper uncertainty range, $SP^-$ is the value of the lower uncertainty range, $K_1$ and $K_2$ are emperic constants, and where t is the time from last updating of $SP^+$ and $SP^-$. The constants $K_1$ and $K_2$ can be equal, whereby the upper and lower uncertainty ranges become symmetrical. However, as stubbing and breakage of the electrode only gives a shortening of the electrode, $K_1$ may preferably be greater than $K_2$ whereby the upper uncertainty range increases faster than the lower uncertainty range.

By the method according to the invention, the upper and lower uncertainty ranges for the electrode tip position are adjusted either by manual sounding of the electrode length, by weighing of the electrode, or by vertical movement of the electrode.

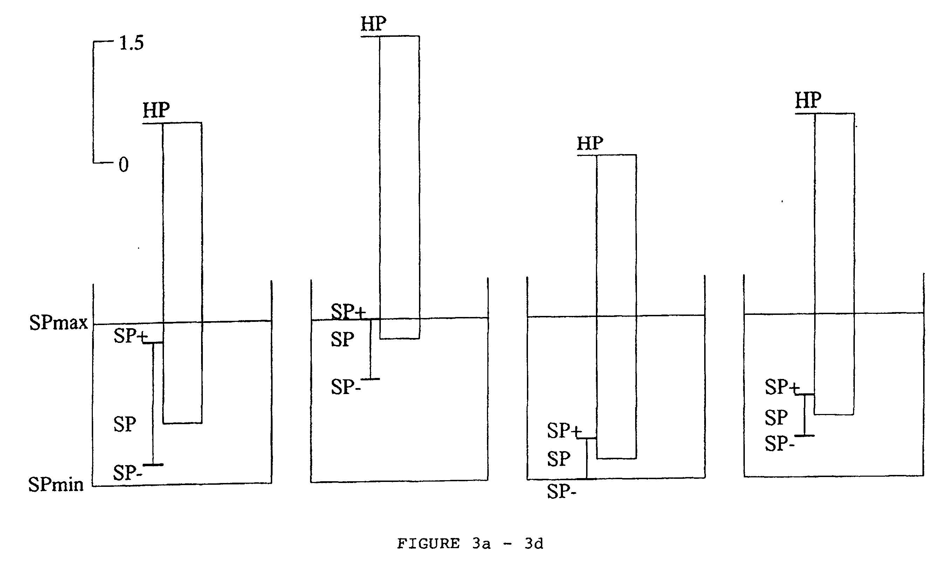

By adjusting the upper and lower uncertainty ranges by vertical movement of the electrode one uses a procedure which will be described with reference to figures 3a - 3d. The electrode is being lifted until the electrode holder reaches its maximum upper position whereafter the electrode is lowered as far as possible, preferably until the electrode holder reaches its minimum position. For a smelting fumace where SPmax = 2 m and SPmin = 0 and where the distance between the upper maximum position of the electrode holder and the lower minimum position of the electrode holder, is 1.5 meter, the upper and lower uncertainty ranges can be appreciably reduced.

In the situation shown in figure 3a there is a total uncertainty range of 1.5 meter; that is, the combined upper and lower uncertainty ranges are 1.5 meter. Thereafter the electrode is lifted until the electrode holder reaches its upper maximum position as shown in figure 3b. If the distance between the upper uncertainty range for the electrode tip position and SPmax is less the total length the electrode has been lifted, the extent of the upper uncertainty range can be reduced. The extent of the lower uncertainty range for the electrode tip position can be reduced in a corresponding way if the electrode can be moved vertically downwards a distance at which the extent of the lower uncertainty range becomes equal to SPmin. This position is shown in figure 3c. After the electrode during a short time interval first has been lifted and then lowered as shown in figure 3a to 3c, the total extent of the upper and lower uncertainty ranges in the example shown in the figures, will be reduced from 1.5 meter to 0.5 m as shown in figure 3d.

During normal furnace operation, the movements of the electrode will not be as large as shown in figures 3a to 3d, but if the uncertainty ranges for the electrode tip position becomes large, even smaller electrode movements can be used to adjust the upper and lower uncertainty ranges for the estimated tip position.

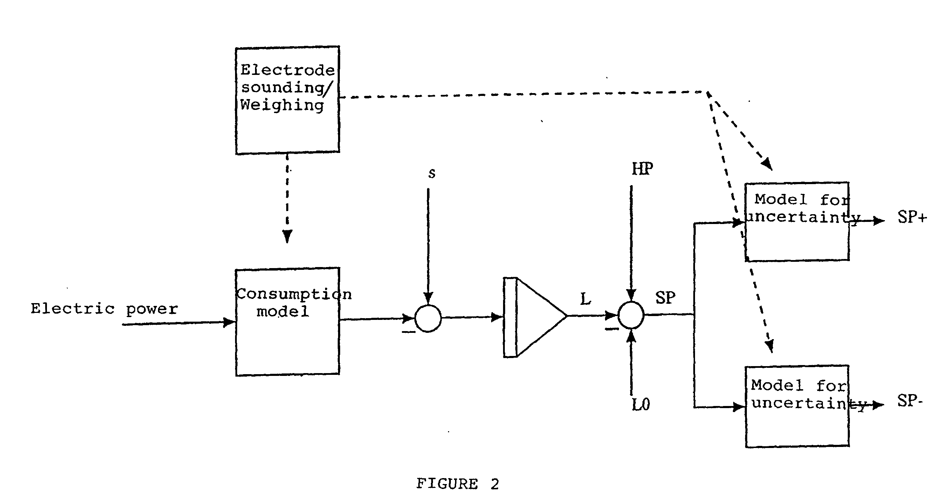

In figure 2 there is shown a block diagram illustrating the method for estimating the electrode tip position according to the present invention. As shown in figure 2, the electrode consumption is calculated by use of a model for electrode consumption. Electrode slip through the electrode holder is subtracted from the electrode consumption and the electrode length is estimated. Based on the estimated electrode length, the electrode tip position is estimated by the use of electrode holder position, HP, and Lo. At the same time the upper and lower uncertainty ranges are calculated using the model for uncertainty. Upper and lower uncertainty ranges are on figure 2 shown as $SP^+$ and $SP^-$, respectively. By manual sounding of the electrode length and/ or by weighing of the electrode, the upper and lower uncertainty ranges for the electrode tip position are also adjusted and in addition used to adjust the model for electrode consumption.

**Claims**

1. Method for estimating the electrode tip position for submerged, consumable electrodes in electric smelting furnaces, where the electrode tip position for an electrode is estimated based on the position of the electrode holder and a function for consumed electrode per unit of time, **characterized in that** after the electrode tip position has been determined, an upper and a lower uncertainty range for the electrode tip position are calculated whereafter the upper and lower uncertainty ranges during normal operation of the furnace are increased by calculating an increase in the upper and lower uncertainty ranges and where the size of the upper and lower uncertainty ranges are updated by manual sounding of the electrode and/or by weighing of the electrode and/or by vertical movement of the electrode.

2. Method according to claim 1, **characterized in that** the increase in the upper and lower uncertainty ranges during normal operation of the furnace are calculated according to the following formulas:

$$SP^+ = K_1 \sqrt{t} + SP^+(t=0)$$

and

$$SP^- = K_2\sqrt{t}+ SP^-(t=0),$$

where, $K$, and $K_2$ are empirical constants, and where t is the time from the last updating of $SP^+$, respectively $SP^-$.

**3.** Method according to claim 2, **characterized in that** the constants $K_1$ and $K_2$ are identical.

**4.** Method according to claim 2, **characterized in that** the constant $K_1$ is greater than constant $K_2$.

**5.** Method according to claim 1, **characterized in that** the size of the upper and the lower uncertainty ranges for estimated tip position after manual sounding of the electrode length is adjusted to a size corresponding to the uncertainty in the electrode length measured by manual sounding.

**6.** Method according to claim 1, **characterized in that** the upper and lower uncertainty ranges for estimated electrode tip position after weighing of the electrode are adjusted to a size which corresponds to the uncertainty in electrode length for calculated electrode length based on weighing of the electrode.

**7.** Method according to claim 1, **characterized in that** the upper uncertainty range for estimated electrode length is updated if the upper limit for the upper uncertainty range during lifting of the electrode is greater than a maximum value for the electrode tip position.

**8.** Method according to claim 1, **characterized in that** the lower uncertainty range for estimated electrode tip position is updated if the lower limit for the lower uncertainty range during lowering of the electrode is below a minimum value for the electrode tip position.

**Patentansprüche**

**1.** Verfahren zum Schätzen der Position einer Elektrodenspitze für eingetauchte, abschmelzende Elektroden in elektrischen Schmelzöfen, bei dem die Position der Elektrodenspitze für eine Elektrode auf der Grundlage der Position des Elektrodenhalters und einer Funktion für eine abschmelzende Elektrode pro Zeiteinheit abgeschätzt wird, **dadurch gekennzeichnet, daß**, nachdem die Position der Elektrodenspitze bestimmt worden ist, ein oberer und ein unterer Unsicherheitsbereich für die Position der Elektrodenspitze berechnet werden, wonach die oberen und unteren Unsicherheitsbereiche während normalen Betriebs des Ofens durch Berechnen einer Zunahme der oberen und unteren Unsicherheitsbereiche vergrößert werden und bei dem die Größen der oberen und unteren Unsicherheitsbereiche durch manuelle Sondierung der Elektrode und/oder durch Wiegen der Elektrode und/oder durch vertikale Bewegung der Elektrode aktualisiert werden.

**2.** Verfahren nach Anspruch 1, **dadurch gekennzeichnet, daß** die Zunahmen der oberen und unteren Unsicherheitsbereiche während normalen Betriebs des Ofens gemäß den folgenden Gleichungen berechnet werden:

$$SP^+ = K_1\sqrt{t}+ SP^+(t = 0)$$

und

$$SP^- =K_2\sqrt{t}+SP^-(t=0)$$

wobei $K_1$ und $K_2$ empixische Konstanten sind und t die Zeit von der letzten Aktualisierung von $SP^+$ beziehungsweise $SP^-$ ist.

**3.** Verfahren nach Anspruch 2, **dadurch gekennzeichnet, daß** die Konstanten $K_1$ und $K_2$ identisch sind.

**4.** Verfahren nach Anspruch 2, **dadurch gekennzeichnet, daß** die Konstante $K_1$ größer als die Konstante $K_2$ ist.

**5.** Verfahren nach Anspruch 1, **dadurch gekennzeichnet, daß** die Größe der oberen und unteren Unsicherheitsbereiche für die geschätzte Position der Spitze nach manueller Sondierung der Elektrodenlänge auf eine Größe eingestellt wird, die der Unsicherheit der durch manuelle Sondierung gemessenen Elektrodenlänge entspricht.

**6.** Verfahren nach Anspruch 1, **dadurch gekennzeichnet, daß** die oberen und unteren Unsicherheitsbereiche für die geschätzte Position der Elektrodenspitze nach Wiegen der Elektrode auf eine Größe eingestellt weiden, die der Unsicherheit der Elektrodenlänge für die berechnete Elektrodenlänge auf der Grundlage des wiegens der Elektrode entspricht.

**7.** Verfahren nach Ansprach 1, **dadurch gekennzeichnet, daß** der obere Unsicherheitsbereich für die geschätzte Elektrodenlänge aktualisiert wird, wenn die obere Grenze für den oberen Unsicherheitsbereich während des Anhebens der Elektrode größer als ein maximaler Wert für die Position der Elektrodenspitze ist.

**8.** Verfahren nach Anspruch 1, **dadurch gekennzeichnet, daß** der untere Unsicherheitsbereich für die geschätzte Position der Elektrodenspitze aktualisiert wird, wenn die untere Grenze für den unteren Unsicherheitsbereich während des Absenkens der Elektrode sich unter einem minimalen Wert für die Position der Elektrodenspitze befindet

**Revendications**

**1.** Procédé permettant d'évaluer la position de la tête d'électrode pour des électrodes consommables submergées dans des fours électriques de fusion, au cours de laquelle la position de la tête d'une électrode est évaluée en fonction de la position du support d'électrodes et d'une fonction d'électrode consommée par unité de temps,
**caractérisé en ce qu'**
une fois la position de la tête d'électrode déterminée, une plage d'incertitude supérieure et une plage d'incertitude inférieure sont calculées pour la position de la tête d'électrode, après quoi les plages d'incertitude inférieure et supérieure sont augmentées, lors du fonctionnement normal du four, en calculant une augmentation des plages d'incertitude inférieure et supérieure, et la taille des plages d'incertitude inférieure et supérieure étant mise à jour grâce à un sondage manuel de l'électrode et/ou grâce à une pesée de l'électrode et/ou grâce à un mouvement vertical de l'électrode.

**2.** Procédé selon la revendication 1,
**caractérisé en ce que**
l'augmentation des plages d'incertitude inférieure et supérieure lors du fonctionnement normal du four est calculée selon les formules suivantes :

$$SP^+ = K_1\sqrt{t} + SP^+ (t=0)$$

et

$$SP^- = K_2\sqrt{t} + SP^- (t=0)$$

où $K_1$ et $K_2$ sont des constantes empiriques et où $t$ correspond à la durée écoulée depuis la dernière mise à jour de $SP^+$, respectivement $SP^-$.

**3.** Procédé selon la revendication 2,
**caractérisé en ce que**
les constantes $K_1$ et $K_2$ sont des constantes identiques.

**4.** Procédé selon la revendication 2,
**caractérisé en ce que**
la constante $K_1$ est supérieure à la constante $K_2$.

**5.** Procédé selon la revendication 1,
**caractérisé en ce que**
la taille des plages d'incertitude inférieure et supérieure pour la position évaluée de la tête d'électrode après un sondage manuel de la longueur de l'électrode est adaptée à une taille correspondant à l'incertitude de la longueur d'électrode, mesurée à l'aide d'un sondage manuel.

**6.** Procédé selon la revendication 1,
**caractérisé en ce que**
les plages d'incertitude inférieure et supérieure pour la position évaluée de la tête d'électrode après une pesée de l'électrode sont adaptées à une taille correspondant à l'incertitude de la longueur d'électrode pour la longueur d'électrode calculée en fonction du poids de l'électrode.

**7.** Procédé selon la revendication 1,
**caractérisé en ce que**
la plage d'incertitude supérieure pour la longueur d'électrode évaluée est mise à jour si la limite supérieure de la plage d'incertitude supérieure lors de l'élévation de l'électrode est supérieure à une valeur maximale de la position de la tête d'électrode.

**8.** Procédé selon la revendication 1,
**caractérisé en ce que**
la plage d'incertitude inférieure pour la position évaluée de la tête d'électrode est mise à jour si la limite inférieure de la plage d'incertitude inférieure lors de descente de l'électrode est inférieure à une valeur minimale de la position de la tête d'électrode.

FIGURE 1

FIGURE 2

FIGURE 3a - 3d